# EUROPÄISCHE PATENTSCHRIFT

(11) **EP 1 806 057 B1**
(45) Veröffentlichungstag und Bekanntmachung des Hinweises auf die Patenterteilung: **14.07.2010**
(21) Anmeldenummer: 07000025.2
(22) Anmeldetag: 02.01.2007
(51) Int. Cl.: A23K 1/00, A23K 1/165, A61K 9/16, A23L 1/00

(54) **Micropellets für die Herstellung von Tiernahrungspellets**
Micro pellets for the preparation of animal feed pellets
Micropellets pour la préparation de pellets pour nourriture d'animaux

(30) Priorität: 05.01.2006 DE 102006001554
(43) Veröffentlichungstag der Anmeldung: 11.07.2007
(73) Patentinhaber: IPC Process-Center GmbH & Co., 01277 Dresden (DE)
(72) Erfinder: Kempe, Wolfgang, 01169 Dresden (DE); Nagel, Gunnar, 01237 Dresden (DE); Englisch, Wolfram, 01728 Bannewitz (DE); Dittmann, Jörg, 01936 Königsbrück (DE)
(74) Vertreter: Pfenning, Meinig & Partner GbR

(56) Entgegenhaltungen:
- JP-A- 55 092 661
- US-A- 5 603 945
- DATABASE WPI Week 198403 Derwent Publications Ltd., London, GB; AN 1984-013747 XP002429745 & JP 58 205461 A (UENO PHARM CO LTD) 30. November 1983 (1983-11-30)
- DATABASE WPI Week 197940 Derwent Publications Ltd., London, GB; AN 1979-72890B XP002429746 & JP 54 109962 A (RIKEN VITAMIN OIL CO LTD) 29. August 1979 (1979-08-29)
- DATABASE WPI Week 199348 Derwent Publications Ltd., London, GB; AN 1993-382999 XP002429747 & JP 05 286855 A (TAKEDA CHEM IND LTD) 2. November 1993 (1993-11-02)
- DATABASE WPI Week 199028 Derwent Publications Ltd., London, GB; AN 1990-213175 XP002429748 & JP 02 142735 A (NIPPON OILS & FATS CO LTD) 31. Mai 1990 (1990-05-31)
- DATABASE WPI Week 200351 Derwent Publications Ltd., London, GB; AN 2003-536364 XP002429749 & JP 2003 088299 A (DAIICHI KOGYO SEIYAKU CO LTD) 25. März 2003 (2003-03-25)

## Beschreibung

Die Erfindung betrifft Micropellets, die aktive Additive und insbesondere Enzymproteine enthalten. Mit ihnen können Tiernahrungspellets hergestellt werden in denen die vorab in Micropellets hochkonzentriert enthaltenen Additive bei der Pelletierung homogen verteilt werden können.

Neben anderen Additiven, wie z.B. Vitaminen, Antioxidanten, Farbstoffen, trifft dies besonders auf Enzyme zu.

Letztgenannte sind aber sehr temperaturempfindlich und können bei höheren Temperaturen an Aktivität bis hin zum Totalverlust verlieren. Dabei wirkt sich auch Feuchtigkeit insbesondere in Kombination mit höheren Temperaturen nachteilig aus.

Bei der Herstellung von Tiernahrungspellets wird aber mit Wasserdampf gearbeitet, so dass eine Reduzierung bzw. der Totalverlust an Aktivität ein erhebliches ökonomisches Problem darstellen.

Es sollten daher Vorkehrungen getroffen werden, um die eingesetzte(n) Additive vor dem Temperatur- und/oder Feuchtigkeitseinfluss schützen zu können. Dadurch soll auch nach der Herstellung von Tiernahrungspellets die gewünschte Wirkung weitestgehend entfaltet werden können.

Dabei sollte der Anteil an aktivem Additiv in den einzelnen Micropellets möglichst konstant sein und dies auch nach der Herstellung von Pellets beibehalten sein.

Üblicherweise erfolgt zumindest ein Teil der Herstellung solcher Micropellets mit einer an sich bekannten Wirbelschichttechnik, bei der mit flüssigem Medium gearbeitet wird. Hierbei bereiten organische Komponenten, insbesondere in Verbindung mit Wasser Probleme. So lassen sich Fette und Öle nur schwer in Wasser gleichmäßig verteilen, wobei auch die jeweiligen Temperaturen einen erheblichen Einfluss ausüben können. So liegen viele Fette bereits bei Temperaturen unter 50 bis 40 °C in fester Phase vor und werden dementsprechend bei einer Abkühlung fest. Dadurch kann es zu Entmischungen aus einer wässrigen Emulsion oder gar zur Ausbildung von festen Anhaftungen in Behältnissen oder anderen Elementen von Verarbeitungsanlagen, wie z. B. Ventilen oder Düsen kommen. Dies macht einen erheblichen Reinigungsaufwand erforderlich und führt zu unerwünschten Verlustzeiten, so dass dann die Verfügbarkeit der Anlagentechnik nicht immer gegeben ist.

Außerdem bereitet es mit den bekannten Lösungen Probleme, eine enge Partikelgrößenverteilung, bei kleinen Durchmessern und eine möglichst präzise Sphärizität einhalten zu können.

JP 55 092661 A betrifft die Herstellung von Tiernahrung mit Additiven und einer Beschichtung mit Fumarsäure.

DATABASE WPI Week 198403 Derwent Publications Ltd. London, GB; AN 1984-013747 XP002429745&JP 58 205461 A, 30. November 1983 offenbart Fischfutter bei dem Vitamine mit Fettsäure oder Glycerinfettsäureester beschichtet sind.

Für die Herstellung von stabilisierter Askorbinsäure oder eines Salzes davon ist es aus DATABASE WPI Week 197940 Derwent Publications Ltd. London, GB; AN 1979-72890B XP002429746& JP 54 109962 bekannt, eine Beschichtung einer Mischung von Fett und Öl sowie Zuckerester einer Fettsäure vorzusehen.

DATABASE WPI Week 199348 Derwent Publications Ltd. London, GB; AN 1993-382999 XP002429748 & JP 05 286855 betrifft eine ähnliche Lösung hierzu, bei der eine Beschichtung eines Aluminiumsalzes einer Fettsäure vorgeschlagen wird.

Aus DATABASE WPI Week 199028 Derwent Publications Ltd. London, GB; AN 1990-213175 XP002429748& JP 02 142735 ist es bekannt, einen Kern zu beschichten. Dabei wird ein bakterielles Material mit Lipiden beschichtet.

Es ist daher Aufgabe der Erfindung, Micropellets für die Herstellung von Tiernahrungspellets zur Verfügung zu stellen, die problemloser herstellbar sind und die einen geringeren Aktivitätsverlust von enthaltenem Additiv auch nach der Herstellung von Pellets aufweisen.

Erfindungsgemäß wird diese Aufgabe mit den Merkmalen des Anspruchs 1 gelöst. Vorteilhafte Ausgestaltungen und Weiterbildungen können mit in den untergeordneten Ansprüchen bezeichneten Merkmalen erreicht werden.

Neben mindestens einem Enzymprotein als aktives Additiv, dessen Anteil bei mindestens 20 Masse-% liegen soll, sind die einzelnen Micropellets mit einer langkettigen Fettsäure, deren Anteil ebenfalls mindestens 25 Masse-% betragen soll, und außerdem mit einem Zuckerester gebildet. Das Zuckerester soll mit einem Anteil von mindestens 0,3 bevorzugt mit 0,5 bis 3 Masse-% enthalten sein. Zusätzlich können weitere Komponenten, wie z.B. ein Restwasseranteil, ein organischer Binder oder Farbstoff u.a.m. enthalten sein.

Neben Langkettigen Fettsäuren können andere zu emulgierende Komponenten enthalten sein. Diese können an Stelle einer Fettsäure allein, im Gemisch mit Fettsäure oder als Gemisch mehrerer solcher zu emulgierender Komponenten enthalten sein.

Eine zu emulgierende Komponente kann ausgewählt sein aus Glyceriden, Aliphaten oder Wachsalkoholen. Aliphaten oder Wachsalkohole sollten dabei geeignetes Schmelzverhalten und hydrophobe Eigenschaften aufweisen. Geeignete Aliphate sind beispielsweise langkettige Alkane mit mehr als sechzehn Kohlenstoffatomen.

Als Glycerid können Tri-, Di- oder Monoglyceride enthalten sein. Diese können mit Fettsäure und einem Zucker (z.B. Glucose oder Sachararose) als Zuckerester vorliegen.

Wachse können natürlicher oder künstlicher Art sein. Es kann Montan-, Bienen- oder Carnaubawachs enthalten sein.

Zuckerester können durch Zuckerglyceride ersetzt oder auch im Gemisch mit Zuckerester enthalten sein. Zuckerglyceride können mit Zucker und Fettsäure gebildet sein. So ist beispielsweise Sacharosemonostearat ein geeignetes Zuckerglycerid und mit Disacharid und Stearinsäure gebildet.

Dabei kann der Aufbau erfindungsgemäßer Micropellets in Abhängigkeit vom jeweiligen Vorgehen bei der Herstellung beeinflusst sein.

So ist ein Kern von einer Beschichtung umschlossen. Der Kern kann allein aus aktivem Additiv oder aber mit in einer Matrix eingebettetem Additiv gebildet sein. Eine solche Matrix kann neben Additiv auch die jeweilige Fettsäure und/oder zu emulgierende Komponente(n) sowie ein Zuckerester und/oder Zuckerglycerid enthalten oder aus diesen beiden Komponenten gebildet sein.

Als geeignete Zuckerglyceride können alle, die zur Gruppe E 474 gehörenden Verbindungen gezählt werden und in Lebensmitteln zugelassen sind, einegsetzt werden.

Bevorzugt soll ein Zuckerester einer Saccharose mit 1 bis 3 Molekülen Fettsäure, enthalten sein, das für Lebensmittel unbedenklich ist und zur Gruppe E 473 zählt. Es kann sich dabei um das Zuckerester der Fettsäure handeln, die ebenfalls in Micropellets enthalten ist. Zuckerester können Sucrosestearate, - palmitate, -laurate, oleate oder -erucate sein.

Bevorzugte langkettige Fettsäuren sind Stearin- und Palmitinsäure.

Die erfindungsgemäßen Micropellets sollten eine Partikelgröße im Bereich von 50 bis 1000 µm, bevorzugt kleiner 500 µm, besonders bevorzugt eine Größe im Bereich 250 bis 350 µm aufweisen.

Vorteilhaft für die Verarbeitung und Lagerung kann zusätzlich ein organischer Binder enthalten sein. Dieser verbessert z.B. die Abriebfestigkeit und kann ein Aneinanderhaften verhindern. Hierfür sind modifizierte Cellulosen, Polyvinylalkohole, Polyvinylpyrrolidone, oder insbesondere Methylcellulosen geeignet.

Die nach der Granulation erstarrte Fettsäure oder zu emulgierende Komponente bildet einen Schutz der/des Additive(s) gegen Umwelteinflüsse, wie z.B. Feuchtigkeit und Sauerstoff. Es kann damit aber noch ein weiterer vorteilhafter Effekt bei der Pelletierung erreicht werden. Die erstarrte Fettsäure oder zu emulgierende Komponente vollzieht einen Phasenübergang beim Erreichen ihrer Schmelztemperatur und es wird somit Energie erforderlich, was temporär zu einer deutlich verringerten Temperaturerhöhung oder gar keiner weiteren Temperaturerhöhung führt. Gleichzeitig mit dem Feuchtigkeitsschutz kann so auch der negative Temperatureinfluss auf das/die Additiv(e) bei der Pelletierung reduziert und dadurch die Aktivität beibehalten, zumindest jedoch deutlich weniger reduziert werden, als dies beim Stand der Technik der Fall ist.

Nach Unterschreitung der Schmelztemperatur erstarrt die Fettsäure oder zu emulgierende Komponente wieder und bleibt in den fertigen Tiernahrungspellets enthalten, so dass auch die Schutzfunktion wieder erfüllt werden kann. Außerdem sind die in Rede stehenden Fettsäuren oder zu emulgierenden Komponenten durchaus verstoffwechselbar und in dieser Art und Menge physiologisch als unbedenklich anzusehen.

Die Erfindung kann außerdem weitergebildet werden, indem mindestens ein weiterer Stoff bzw. ein Stoffgemisch eingesetzt wird, der/das ebenfalls eine Phasenumwandlung im kritischen, bei der Herstellung von Tiernahrungspellets auftretenden Temperaturbereich vollzieht. Dabei sollte die Phasenumwandlungstemperatur möglichst höher, zumindest aber eine andere sein, als die der Fettsäure oder zu emulgierenden Komponente(n). Hierfür können Salzhydrate, ein einen eingelagerten Kristallwasseranteil aufweisendes Carbonat, Phosphat, Citrat, Acetat, Sulfat, ein Zeolith und/oder ein Metalloxid eingesetzt werden. Diese sollten einen Phasenübergang im Temperaturbereich zwischen 30 und 130 °C vollziehen können.

Ein solcher Stoff kann Bestandteil der Matrix sowie der Beschichtung sein. Mit ihm kann aber auch eine gesonderte Schicht um einen Kern, eine Barriereschicht oder eine äußere Hülle gebildet werden. Es können auch mehrere solcher Schichten gebildet werden.

In jedem Fall sollte aber eine Schicht oder Beschichtung eine vollflächige, vollständig geschlossene Schicht sein, die um einen Kern ausgebildet ist.

Allein oder zusätzlich kann eine Hüllschicht radial außen ausgebildet sein. Diese sollte aus oder auch mit einem hydrophoben Stoff oder Stoffgemisch gebildet sein.

Eine solche Hüllschicht kann aus oder mit einem Salz einer Fettsäure, insbesondere von Palmitin- oder Stearinsäuere, wie z.B. Magnesiumstearat, Calziumstearat bzw. Wasserglas, das/die physiologisch unbedenklich sein sollte(n), ausgebildet werden. So können Micropellets weiter vor Feuchtigkeit geschützt, der Abrieb weiter reduziert und ein Anhaften oder Verklumpen vermieden werden, so dass die Verarbeitbarkeit und eine homogene Verteilung bei der Pelletierung verbessert werden kann.

Nachfolgend soll auf Möglichkeiten für die Herstellung erfindungsgemäßer Micropellets eingegangen werden.

Dabei kann eine wässrige Emulsion aus langkettiger Fettsäure und/oder zu emulgierender Komonente und Zuckerester und/oder Zuckerglycerid bei einer Temperatur oberhalb der Schmelztemperatur der Fettsäure hergestellt werden. Dies kann ständig gerührt werden, so dass eine über das Volumen gleichmäßige Konsistenz aufrechterhalten wird.

In einer ersten Alternative kann der Emulsion zusätzlich ein oder mehrere aktive Additive zugegeben werden. Eine solche Emulsion kann dann mittels eines Wirbelschichtverfahrens granuliert werden. Die so erhaltenen Micropellets sind in Form eines in einer Matrix eingebetteten Additivs ausgebildet und können so weiterverarbeitet werden.

Sie können aber auch als Kern in einem Micropellet fungieren, der nachfolgend mit mindestens einer Beschichtung oder mehreren Schichten überzogen werden kann. Eine Beschichtung kann wieder aus einer wässrigen Emulsion, in der Fettsäure und/oder zu emulgierender Komponente(n) und Zuckerester und/oder Zuckerglycerid enthalten sind, durch beispielsweise Aufsprühen in Wirbelschichttechnik ausgebildet werden.

Andere Stoffe oder Stoffgemische können analog bevorzugt nachfolgend aufgebracht werden.

In der Emulsion kann zusätzlich und bevorzugt Methylcellulose, als organischer, wasserlöslicher Binder, gelöst worden sein. Diese verbessert die Verarbeitbarkeit bei der Herstellung der Micropellets oder der Ausbildung einer Beschichtung auf einem Kern.

Insbesondere die Fettsäure und/oder zu emulgierende Komponente(n) in Verbindung mit dem Zuckerester und/oder Zuckerglycerid verbessern die Verarbeitbarkeit erheblich. Es kommt erst bei Temperaturen unterhalb von 30 °C zu ersten Problemen durch Anhaftungen in den Fertigungsanlagenkomponenten, so dass Ausfallzeiten wegen erforderlicher Reinigung reduziert werden können. Auch eine vollständige Reinigung ist erheblich leichter möglich. Es kann auf herkömmliche, ohnehin vorhandene Anlagentechnik bei der Herstellung zurückgegriffen werden und auf Modifizierungen an einer vorhandenen Anlage verzichtet werden.

Die Micropellets können in enger Partikelgrößenverteilung hergestellt werden, so dass auf eine Klassierung verzichtet werden kann.

Die enthaltenen Additive behalten ihre Aktivität weitestgehend, so dass z.B. Micropellets mit sehr hoher entsprechend gewünschter Enzymaktivität zur Verfügung gestellt werden können, die auch nach der Pelletierung noch gegeben ist. Es lassen sich Aktivitäten von bis zu 50.000 FTU für Phytase einhalten. Die Aktivität kann aber auch auf einen vorgegebenen Wert eingestellt werden, zumindest jedoch eine Aktivität in einem engen Aktivititätsintervall eingehalten werden. Dabei wird die Phytaseaktivität als Wert der Substratfreisetzung 1 µmol des Phosphats pro Minute ausgehend von 5,1 µmol an Phosphat pro Minute von einem Natriumphytat bei 37 °C und einem pH-Wert von 5,5 definiert.

Nachfolgend soll die Erfindung an Hand von Beispielen weiter erläutert werden.

### Beispiel 1:

Dabei sollen 5 kg Emulsion für die Herstellung von Micropellets 1975 g Wasser, 1500 g Palmitinsäure und 25 g Palmitinsäureester in ein beheizbares Rührgerät gegeben, bei 70 °C intensiv verrührt und die Palmitinsäure emulgiert werden.

In diese Emulsion werden 1500 g einer 10 %-igen wässrigen Lösung von Methylcellulose gegeben, weiter gerührt und dabei homogen verteilt.

Die fertige Emulsion kann dann für die Ausbildung einer Beschichtung in eine Wirbelschicht eingesprüht werden, so dass die Beschichtung aus im Wesentlichen Palmitinsäure, Palmitinsäureester und Methylcellulose auf Kernen, die in der Wirbelschichtanlage bearbeitet werden können, ausgebildet werden kann. Das Einsprühen kann mit einer Temperatur der Emulsion unterhalb von 70 °C, bevorzugt bei einer Temperatur im Bereich 30 bis 40 °C erfolgen.

Die Kerne können aus bzw. mit Phytase gebildet sein.

Die fertigen Micropellets hatten eine mittlere Partikelgröße von 400 µm und wiesen eine Enzymaktivität von 45.000 FTU auf.

Die Beschichtung war mit ca. 89,5 Masse-% Palmitinsäure, ca. 9 Masse-% Methylcellulose und ca. 1,5 Masse-% Palmitinsäuerester und einer Restfeuchte von kleiner 10% gebildet.

Phytase kann aber auch bereits der vorab beschriebenen Emulsion mit 5 kg Masse und einem Feststoffanteil von ca. 30 % zugegeben und darin homogen verteilt werden, so dass beim Versprühen der Emulsion in einer Wirbelschicht das Enzym, als aktives Additiv in einer entsprechenden Matrix eingeschlossen bzw. enthalten ist. So hergestellte Micropellets erreichten einen Anteil von ca. 47 Masse-% Palmitinsäure, ca. 47 Masse-% Phytase, ca. 4,8 Masse-% Methylcellulose und ca. 0,8 Masse-% Palmitinsäuereester.

Nachfolgend können, wie im allgemeinen Teil der Beschreibung erwähnt, mindestens eine weitere Schutz- oder Hüllschicht aufgebracht werden.

Micropellets mit aktivem Additiv, die bereits beschichtet sind, wobei solche Schichten, wie die beschriebenen Barriere- oder Hüllschichten auf Kernen ausgebildet worden sind, können in einer Wirbelschicht auch mit der Emulsion, wie sie am Anfang definiert worden ist, ohne aktives Additiv überbeschichtet werden. Eine solche Überbeschichtung kann mindestens ca. 15 Masse-% erreichen.

### Beispiel 2:

In 395 g heißes Wasser (85 und 95 °C) werden mittels eines Ystral Dispergierers 5 g eines Zuckeresters Typ P 1670, der von der Firma Syntapharm kommerziell erhältich ist, zu gegeben und ca. 5 min dispergiert und somit gelöst. 300 g Schmelze eines Triglycerids (Revel C) mit einer Temperatur von ca. 80 bis 90 °C werden bei laufendem Dispergierer in die Wasser-Zuckerester-Lösung gegeben und dispergiert. Es entsteht eine Triglycerid in Wasser Emulsion.

Danach erfolgt die Zugabe von 300 g einer 10 %-igen Methylcelluloselösung (kalt), die in der Emulsion homogen verteilt wird. Es soll eine glatte, optisch homogene, linimentartige viskose Emulsion erhalten worden sein, die nicht aufrahmt. Nach Abkühlung auf Temperaturen im Bereich 50 bis 60 °C kann die Emulsion wie beim Beispiel 1 im Wirbelbett für die Herstellung von Micropellets versprüht werden.

## Patentansprüche

1. Micropellets für die Herstellung von Tiernahrungspellets, bei dem die Micropellets mit mindestens 25 Masse-% einer langkettigen Fettsäure und/oder mindestens einer zu emulgierenden Komponente, die ausgewählt ist aus Glyceriden, Aliphaten und Wachsalkoholen, mindestens 0,3 Masse-% eines Zuckeresters und/oder einem Zuckerglycerid sowie mindestens 20 Masse-% mindestens eines Enzymproteins als aktive Additiv gebildet sind, wobei das aktive Additiv einen Kern bildet oder mit dem aktiven Additiv ein Kern gebildet ist, der von einer mit Fettsäure und/oder zu emulgierender Komponente und Zuckerester und/oder Zuckerglycerid gebildeten Beschichtung umschlossen ist.

2. Micropellets nach Anspruch 1, **dadurch gekennzeichnet, dass** eine zu emulgierende Komponente ein Tri-, Di- oder Monoglycerid ist.

3. Micropellets nach einem der vorhergehenden Ansprüche, **dadurch gekennzeichnet, dass** eine zu emulgierende Komponente Montan-, Bienen- oder Carnaubawachs ist.

4. Micropellets nach einem der vorhergehenden Ansprüche, **dadurch gekennzeichnet, dass** das aktive Additiv in einer mit Fettsäure und/oder zu emulgierender Komponente und Zuckerester und/oder Zuckerglycerid gebildeten Matrix eingebettet ist.

5. Micropellets nach einem der vorhergehenden Ansprüche, **dadurch gekennzeichnet, dass** eine Palmitin- und/oder Stearinsäure enthalten ist.

6. Micropellets nach einem der vorhergehenden Ansprüche, **dadurch gekennzeichnet, dass** die Micropellets eine Partikelgröße von 50 bis 1000 µm aufweisen.

7. Micropellets nach einem der vorhergehenden Ansprüche, dass zusätzlich eine Methylcellulose, eine modifizierter Cellulose, ein Polyvinylalkohol und/oder ein Polyvinylpyrrolidon mit einem Anteil von mindestens 3 Masse-% enthalten ist/sind.

8. Micropellets nach einem der vorhergehenden Ansprüche, **dadurch gekennzeichnet, dass** die Beschichtung in Form einer vollflächigen, vollständig geschlossenen Schicht um Kerne ausgebildet ist.

9. Micropellets nach einem der vorhergehenden Ansprüche, **dadurch gekennzeichnet, dass** die Beschichtung mit mindestens einem weiteren Stoff und/oder Stoffgemisch, der/die eine Phasenumwandlung bei unterschiedlichen Phasenumwandlungstemperaturen vollzieht, gebildet ist.

10. Micropellets nach einem der vorhergehenden Ansprüche, **dadurch gekennzeichnet, dass** die Beschichtung aus zwei oder mehr übereinander gebildeten Schichten gebildet ist, und die Schichten aus unterschiedlichen Stoffen oder Stoffgemischen gebildet sind.

11. Micropellets nach einem der vorhergehenden Ansprüche, **dadurch gekennzeichnet, dass** die Beschichtung mit einem weiteren Stoff oder Stoffgemisch ausgewählt aus einem Salzhydrat, einem einen eingelagerten Kristallwasseranteil aufweisenden Carbonat, Phosphat, Citrat, Acetat, Sulfat, einem Zeolith und/oder Metalloxid gebildet ist.

12. Micropellets nach einem der vorhergehenden Ansprüche, **dadurch gekennzeichnet, dass** auf der Beschichtung eine weitere Füllschicht eines hydrophoben Stoffes oder Stoffgemisches ausgebildet ist.

13. Micropellets nach einem der vorhergehenden Ansprüche, **dadurch gekennzeichnet, dass** zwischen der Oberfläche des Kerns und der Beschichtung eine aus einem hydrophoben Stoff oder Stoffgemisch gebildete Barriereschicht ausgebildet ist.

14. Micropellets nach einem der vorhergehenden Ansprüche, **dadurch gekennzeichnet, dass** der hydrophobe Stoff oder ein solches Stoffgemisch ein Salz einer Fettsäure ist oder dieses enthält.

15. Micropellets nach einem der vorhergehenden Ansprüche, **dadurch gekennzeichnet, dass** der hydrophobe Stoff oder ein solches Stoffgemisch Magnesiumstearat, Calziumstearat, und/oder Wasserglas ist oder einen solchen Stoff enthält.

## Claims

1. Micropellets for the production of animal feed pellets, in which the micropellets are formed with at least 25% by weight of a long-chain fatty acid and/or at least one constituent which is to be emulsified, which is selected from glycerides, aliphatic compounds and wax alcohols, at least 0.3% by weight of a sugar ester and/or a sugar glyceride and also at least 20% by weight of at least one enzyme protein as active additive, the active additive forming a core or a core being formed with the active additive, which core is surrounded by a coating formed with fatty acid and/or constituent which is to be emulsified and sugar ester and/or sugar glyceride.

2. Micropellets according to Claim 1, **characterised in that** one constituent which is to be emulsified is a triglyceride, diglyceride or monoglyceride.

3. Micropellets according to one of the preceding claims, **characterised in that** one constituent which is to be emulsified is montan wax, beeswax or carnauba wax.

4. Micropellets according to one of the preceding claims, **characterised in that** the active additive is embedded in a matrix formed with fatty acid and/or constituent which is to be emulsified and sugar ester and/or sugar glyceride.

5. Micropellets according to one of the preceding claims, **characterised in that** a palmitic and/or stearic acid is contained therein.

6. Micropellets according to one of the preceding claims, **characterised in that** the micropellets have a particle size of 50 to 1000 µm.

7. Micropellets according to one of the preceding claims, that additionally a methyl cellulose, a modified cellulose, a polyvinyl alcohol and/or a polyvinylpyrrolidone is/are contained in a proportion of at least 3% by weight.

8. Micropellets according to one of the preceding claims, **characterised in that** the coating is in the form of a full-surface, completely closed layer around cores.

9. Micropellets according to one of the preceding claims, **characterised in that** the coating is formed with at least one further substance and/or substance mixture which completes a phase transition at different phase transition temperatures.

10. Micropellets according to one of the preceding claims, **characterised in that** the coating is formed of two or more layers formed one above the other, and the layers are formed from different substances or substance mixtures.

11. Micropellets according to one of the preceding claims, **characterised in that** the coating is formed with a further substance or substance mixture selected from a salt hydrate, a carbonate, phosphate, citrate, acetate, sulphate having an incorporated content of water of crystallisation, a zeolite and/or metal oxide.

12. Micropellets according to one of the preceding claims, **characterised in that** a further enveloping layer of a hydrophobic substance or substance mixture is formed on the coating.

13. Micropellets according to one of the preceding claims, **characterised in that** a barrier layer formed from a hydrophobic substance or substance mixture is formed between the surface of the core and the coating.

14. Micropellets according to one of the preceding claims, **characterised in that** the hydrophobic substance or such a substance mixture is a salt of a fatty acid or contains this.

15. Micropellets according to one of the preceding claims, **characterised in that** the hydrophobic substance or such a substance mixture is magnesium stearate, calcium stearate and/or waterglass or contains such a substance.

## Revendications

1. Micropellets pour la fabrication de pellets destinés à l'alimentation animale, les micropellets étant formés avec au moins 25 % en masse d'un acide gras à chaîne longue et/ou au moins un composant à émulsionner qui est choisi parmi des glycérides, des substances aliphatiques et des alcools de cire, avec au moins 0,3 % en masse d'un ester de sucre et/ou d'un glycéride de sucre, ainsi qu'avec au moins 20 % en masse d'au moins une protéine enzymatique comme additif actif, dans lesquels l'additif actif forme un noyau ou un noyau est formé avec l'actif, lequel noyau est enveloppé d'un revêtement formé de l'acide gras et/ou du composant à émulsionner et de l'ester de sucre et/ou du glycéride de sucre.

2. Micropellets selon la revendication 1, **caractérisés en ce qu'**un composant à émulsionner est représenté par un tri-, di- ou monoglycéride.

3. Micropellets selon l'une quelconque des revendications précédentes, **caractérisés en ce qu'**un composant à émulsionner est une cire de montan, d'abeille ou de carnauba.

4. Micropellets selon l'une quelconque des revendications précédentes, **caractérisés en ce que** l'additif actif est noyé dans une matrice formée avec l'acide gras et/ou le composant à émulsionner et avec l'ester de sucre et/ou le glycéride de sucre.

5. Micropellets selon l'une quelconque des revendications précédentes, **caractérisés en ce qu'**ils contiennent un acide palmitique et/ou un acide stéarique.

6. Micropellets selon l'une quelconque des revendications précédentes, **caractérisés en ce que** les micropellets présentent une taille particulaire de 50 à 1000 µm.

7. Micropellets selon l'une quelconque des revendications précédentes, **caractérisés en ce qu'**ils contiennent, en complément, une méthylcellulose, une cellulose modifiée, un alcool polyvinylique et/ou une polyvinylpyrrolidone avec une fraction d'au moins 3 % en masse.

8. Micropellets selon l'une quelconque des revendications précédentes, **caractérisés en ce que** le revêtement se présente sous la forme d'une couche complètement fermée sur toute la surface autour des noyaux.

9. Micropellets selon l'une quelconque des revendications précédentes, **caractérisés en ce que** le revêtement est formé avec au moins une autre substance et/ou un mélange de substances, qui subit une transition de phase à des températures de transition de phase différentes.

10. Micropellets selon l'une quelconque des revendications précédentes, **caractérisés en ce que** le revêtement est formé à partir de deux ou de plusieurs couches formées l'une sur l'autre et **en ce que** les couches sont formées à partir de différentes substances ou de différents mélanges de substances.

11. Micropellets selon l'une quelconque des revendications précédentes, **caractérisés en ce que** le revêtement est formé avec une autre substance ou un autre mélange de substances choisi parmi un hydrate de sel, un carbonate, un phosphate, un citrate, un acétate ou un sulfate présentant une fraction emmagasinée d'eau de cristallisation, une zéolite et/ou un oxyde de métal.

12. Micropellets selon l'une quelconque des revendications précédentes, **caractérisés en ce que** l'on forme sur le revêtement une autre couche d'enrobage constituée d'une substance hydrophobe ou d'un mélange de substances hydrophobe.

13. Micropellets selon l'une quelconque des revendications précédentes, **caractérisés en ce que** l'on a formé, entre la surface du noyau et le revêtement, une couche de barrière formée à base d'une substance hydrophobe ou d'un mélange de substances hydrophobe.

14. Micropellets selon l'une quelconque des revendications précédentes, **caractérisés en ce que** la substance hydrophobe ou un tel mélange de substances, est un sel d'un acide gras ou contient celui-ci.

15. Micropellets selon l'une quelconque des revendications précédentes, **caractérisés en ce que** la substance hydrophobe ou un tel mélange de substances est un stéarate de magnésium, un stéarate de calcium et/ou du silicate de soude ou contient cette substance.
